# EUROPEAN PATENT APPLICATION

(11) **EP 4 782 160 A1**
(43) Date of publication of application: **29.07.2026**
(21) Application number: 23953151.0
(22) Date of filing: 19.09.2023
(51) Int. Cl.: B25J 13/08, B25J 5/00, B25J 9/16, B25J 19/02, G05D 1/20, G06N 3/02

(54) **DRIVING ROBOT AND CONTROL METHOD THEREOF**

(71) Applicant: Bear Robotics Korea, Inc., Seoul 04779 (KR)
(72) Inventor: CHOI, Wonsu, Seoul 06772 (KR); HWANG, Keumsung, Seoul 06772 (KR); NAM, Heejin, Seoul 06772 (KR); WOO, Sungho, Seoul 06772 (KR)
(74) Representative: Murgitroyd & Company
(86) International application number: PCT/KR2023/014108
(87) International publication number: WO 2025/063326

(57) **Abstract**

The present disclosure relates to a driving robot which can automatically change from a driving path-based driving method to an intuitive artificial intelligence-based driving method according to driving environment, and a control method thereof, wherein the driving robot includes: a sensor unit which acquires surrounding environment information; an input unit into which map data is inputted; a driving motor unit which moves the robot; and a control unit which determines the driving method on the basis of the surrounding environment information and map data to control the driving motor unit, wherein the control unit may: identify the location of the robot on the basis of the surrounding environment information and map data; determine the driving method on the basis of whether the location of the robot is identified; input direction information of a destination, distance information from the destination, and the surrounding environment information into a pre-trained neural network model to determine the optimal driving direction if the determined driving method is an artificial intelligence-based driving method on the basis of failing to identify the location of the robot; and control the driving motor unit so that the robot moves in the determined driving direction.

## Description

### TECHNICAL FIELD

The present disclosure relates to a driving robot capable of automatically switching from a driving path-based driving mode to an intuitive artificial intelligence-based driving mode according to driving environments, and a control method thereof.

### BACKGROUND

In general, a robot is a machine that automatically processes or operates tasks given to it by its own capabilities, and the application fields of robots are generally classified into various fields such as industrial, medical, space, and underwater applications.

Recently, there has been a growing trend of robots capable of communicating or interacting with humans through voice or gestures.

Such robots may include various types of robots, such as guidance robots deployed in specific locations to provide users with various types of information, and home robots deployed in households.

In order for a robot to navigate, it must locate itself on a map, there must be a path to the destination on the map, and the robot must be able to control its motors to follow the path.

The location of the robot on the map can be determined through a SLAM (Simultaneous Localization and Mapping) function that compares the robot's sensor information, including camera images, LiDAR, and distances from the robot to surrounding obstacles, with map information.

In addition, generation of a path to a destination is divided into the operation of generating a global path from the robot's location to the destination on the map, and generating a local path for avoiding obstacles around the robot. The robot can control its motors through a motion controller to follow the final generated local path.

However, when the robot fails to recognize its own location or fails to generate a path such as a global path or local path, it has no way of knowing the path to the destination and thus stops until assistance from an external party is available, for safety reasons.

In such cases, services such as delivery and guidance by the robot are indefinitely suspended until external assistance is available, or there is the inconvenience of having to move the robot to a different location and restart the robot for location re-recognition.

Therefore, there is a growing need for the development of driving robots capable of autonomous navigation using an intuitive artificial intelligence approach even in driving environments involving a failure of location recognition and a failure of path generation.

### DISCLOSURE

### Technical Problem

The present disclosure is directed to solving the above-described issues and other related issues.

An object of the present disclosure is to provide a driving robot capable of completing a service task by stably driving to a destination even in challenging environmental conditions, by automatically switching from a driving path-based driving mode to an artificial intelligence-based driving mode and determining an optimal driving direction through upon a failure to recognize the robot location or a failure to generate a path, and a control method thereof.

### Technical Solution

A driving robot according to an embodiment of the present disclosure may include a sensor configured to acquire surrounding environment information, an input unit configured to receive map data, a drive motor configured to move the robot, and a controller configured to determine a driving mode based on the surrounding environment information and the map data and to control the drive motor. The controller may be configured to identify a location of the robot based on the surrounding environment information and the map data, determine the driving mode based on whether the location of the robot is identified, based on the determined driving mode being an artificial intelligence-based driving mode due to a failure to identify the location of the robot, determine an optimal driving direction by inputting information about a direction to a destination, information about a distance to the destination, and the surrounding environment information into a pre-trained neural network model, and control the drive motor to cause the robot to move in the determined driving direction.

A method of controlling a driving robot including a drive motor according to an embodiment of the present disclosure may include acquiring surrounding environment information and map data, identifying a location of the robot based on the surrounding environment information and the map data, determining a driving mode based on whether the location of the robot is identified, based on the determined driving mode being an artificial intelligence-based driving mode due to a failure to identify the location of the robot, determining an optimal driving direction by inputting information about a direction to a destination, information about a distance to the destination, and the surrounding environment information into a pre-trained neural network model, and controlling the drive motor to cause the driving robot to move in the determined driving direction.

### Advantageous Effects

According to an embodiment of the present disclosure, upon failing to recognize the location of the robot or failing to generate a path, a driving robot may automatically switch from a driving path-based driving mode to an artificial intelligence-based driving mode and determine an optimal driving direction, thereby stably driving to a destination and completing a service task even in challenging environmental conditions.

As such, according to the present disclosure, the robot may automatically switch from a driving path-based driving mode to an intuitive artificial intelligence-based driving mode and drive stably to a destination without stopping, even when the robot loses the path to the destination or is in a situation where driving is not possible.

According to the present disclosure, when the robot fails to recognize its own location or fails to generate a path to the destination, it does not stop or perform a search operation for location re-recognition. Accordingly, the intended services (such as delivery and guidance) may be rendered by the robot without interruption.

According to the present disclosure, when the robot fails to recognize its own location or fails to generate a path to the destination, the robot may recognize its surrounding environment on its own in an intuitive artificial intelligence mode, avoid obstacles, and move toward the destination, as long as the direction to the destination is known, without requiring a map or a driving path.

### BRIEF DESCRIPTION OF THE DRAWINGS

FIG. 1 is a diagram illustrating a driving robot according to an embodiment of the present disclosure.
FIG. 2 is a diagram illustrating a controller performing a driving path-based driving mode of a driving robot according to an embodiment of the present disclosure.
FIG. 3 is a diagram illustrating a controller performing an artificial intelligence-based driving mode of a driving robot according to an embodiment of the present disclosure.
FIGS. 4 and 5 are diagrams illustrating conditions for determining a driving mode of a driving robot according to an embodiment of the present disclosure.
FIG. 6 is a diagram illustrating a hybrid driving mode of a driving robot according to an embodiment of the present disclosure.
FIGS. 7 to 10 are diagrams illustrating a neural network model training process of a driving robot according to an embodiment of the present disclosure.
FIGS. 11 to 13 are diagrams illustrating hallway driving of a driving robot according to an embodiment of the present disclosure.
FIG. 14 is a flowchart illustrating a control process of a driving robot according to an embodiment of the present disclosure.

### DETAILED DESCRIPTION

Hereinafter, embodiments disclosed in the present specification will be described in detail with reference to the accompanying drawings. Identical or similar components are assigned the same reference numerals regardless of reference symbols, and redundant descriptions thereof will be omitted. The suffixes "module" and "unit" for components used in the following description are given or used interchangeably solely for ease of drafting the specification, and do not themselves have distinct meanings or roles. In addition, in describing the embodiments disclosed in the present specification, a detailed description of related known technology will be omitted to avoid obscuring the gist of the embodiments disclosed herein. The accompanying drawings are provided merely to facilitate understanding of the embodiments disclosed herein. The technical idea disclosed in this specification should not be limited by the drawings. It should be understood that all modifications, equivalents, and substitutions that fall within the spirit and scope of the present disclosure are encompassed by the present disclosure.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

As used herein, the terms neural network, neural network model, and network function may be used interchangeably. A neural network may be composed of a set of interconnected computational units generally referred to as "nodes." These "nodes" may also be referred to as "neurons." A neural network includes at least two nodes. The nodes (or neurons) constituting a neural network may be interconnected by one or more "links."

Artificial Intelligence (AI) refers to the field of research into artificial intelligence or methodologies for creating the same, and machine learning refers to the field of research that defines various problems addressed in the field of artificial intelligence and studies methodologies for solving them. Machine learning is also defined as an algorithm that improves performance on a given task through continuous experience.

An Artificial Neural Network (ANN) is a model used in machine learning, and may refer to the overall class of models with problem-solving capabilities that are composed of artificial neurons (nodes) forming a network through synaptic connections. An artificial neural network may be defined by the pattern of connections between neurons in different layers, the learning process for updating model parameters, and the activation function for generating output values.

An artificial neural network may include an input layer, an output layer, and optionally one or more hidden layers. Each layer includes one or more neurons, and the artificial neural network may include synapses connecting neurons to one another. In an artificial neural network, each neuron may output a value of an activation function for input signals received through synapses, weights, and biases.

Model parameters refer to parameters determined through learning, and include the weights of synaptic connections and the biases of neurons. Hyperparameters refer to parameters that must be set prior to learning in a machine learning algorithm, and include the learning rate, number of iterations, mini-batch size, and initialization function.

The objective of training an artificial neural network may be viewed as determining model parameters that minimize the loss function. The loss function may be used as an indicator for determining optimal model parameters during the training process of an artificial neural network.

Machine learning may be classified into supervised learning, unsupervised learning, and reinforcement learning according to the learning method.

Supervised learning refers to a method of training an artificial neural network with labels for training data given. A label may refer to a correct answer (or result value) that the artificial neural network should infer when training data is input. Unsupervised learning may refer to a method of training an artificial neural network without labels given for training data. Reinforcement learning may refer to a learning method in which an agent defined within a certain environment is trained to select an action or a sequence of actions that maximizes cumulative rewards in each state.

Machine learning implemented with a Deep Neural Network (DNN) including multiple hidden layers among artificial neural networks is referred to as deep learning. Deep learning is a subset of machine learning. Hereinafter, the term machine learning is used as a concept that includes deep learning.

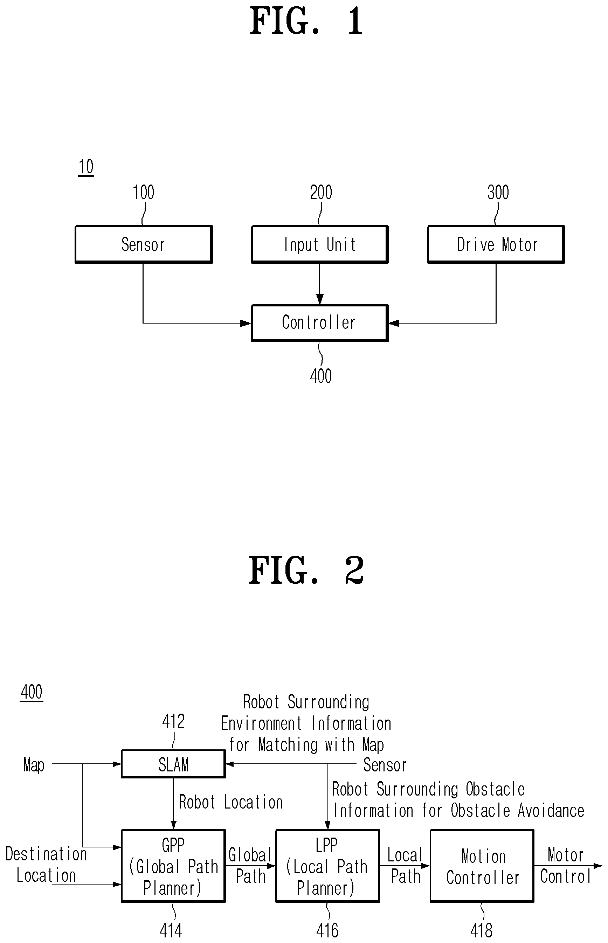

FIG. 1 is a diagram illustrating a driving robot according to an embodiment of the present disclosure.

As shown in FIG. 1, the driving robot 10 of the present disclosure may include a sensor 100 configured to acquire surrounding environment information, an input unit 200 configured to receive map data, a drive motor 300 configured to move the robot, and a controller 400 configured to determine a driving mode based on the surrounding environment information and the map data and to control the drive motor 300.

Here, the sensor 100 may include at least one of a three-dimensional camera, a LiDAR sensor, an ultrasonic sensor, and a distance sensor.

The controller 400 may identify a location of the robot based on the surrounding environment information and the map data, determine the driving mode based on whether the location of the robot is identified. When the determined driving mode is an artificial intelligence-based driving mode due to a failure to identify the location of the robot, the controller may determine an optimal driving direction by inputting information about a direction to a destination, information about a distance to the destination, and the surrounding environment information into a pre-trained neural network model, and control the drive motor 300 to cause the robot to move in the determined driving direction.

In identifying the location of the robot, the controller 400 may acquire the surrounding environment information and the map data, and match the map data with the surrounding environment information to identify a current location of the robot.

Also, in determining the driving mode, the controller 400 may determine a first driving mode based on a driving path when the identification of the location of the robot is successful, and may determine a second driving mode based on artificial intelligence when the identification of the location of the robot fails.

Here, when the controller 400 determines the first driving mode based on the driving path, it may check the current driving mode. When the current driving mode is the second driving mode based on the artificial intelligence, the controller may switch from the second driving mode to the determined first driving mode. When the current driving mode is the first driving mode based on the driving path, the controller may maintain the first driving mode.

When the controller 400 determines the second driving mode based on the artificial intelligence, it may check the current driving mode. When the current driving mode is the first driving mode based on the driving path, the controller may switch from the first driving mode to the determined second driving mode. When the current driving mode is the second driving mode based on the artificial intelligence, the controller may maintain the second driving mode.

Subsequently, when the determined driving mode is a driving path-based driving mode based on that the identification of the location of the robot is successful, the controller 400 may generate a driving path based on information about the location of the robot, the map data, information about a location of the destination, and the surrounding environment information, and control the drive motor 300 to cause the robot to move along the generated driving path.

Here, when failing to generate a driving path in generating the driving path, the controller 400 may switch from the path-based driving mode to the artificial intelligence-based driving mode.

In generating the driving path, the controller 400 may generate a global driving path based on the location information about the robot, map data, and location information about the destination, generate a local driving path based on the global driving path and surrounding environment information, and control the drive motor 300 to cause the robot to move along the generated local driving path.

Here, when failing to generate the global driving path in generating the global driving path, the controller 400 may switch from the path-based driving mode to the artificial intelligence-based driving mode.

In addition, when failing to generate the local driving path in generating the local driving path, the controller 400 may switch from the path-based driving mode to the artificial intelligence-based driving mode.

In determining the optimal driving direction, the controller 400 may determine a first driving direction based on the information about the direction to the destination and the information about the distance to the destination, check whether an obstacle is present in the first driving direction based on the surrounding environment information, and change the first driving direction to a second driving direction when the obstacle is present in the first driving direction.

Here, when the obstacle is not found present in the first driving direction in checking whether the obstacle is present in the first driving direction, the controller 400 may determine the first driving direction as the optimal driving direction.

When the obstacle is found present in the first driving direction in checking whether the obstacle is present in the first driving direction, the controller 400 may check whether the obstacle is a hallway wall, and may recognize a direction along the hallway wall as the direction to the destination when the obstacle is the hallway wall.

When a straight line is detected in the first driving direction based on the surrounding environment information in checking whether the obstacle is the hallway wall, the controller 400 may recognize the detected straight line as the obstacle, check whether the detected straight line is longer than or equal to a set length, and recognize the obstacle as the hallway wall when the detected straight line is longer than or equal to the set length.

Next, the neural network model may determine the driving direction based on the information about the direction to the destination, the information about the distance to the destination, and the surrounding environment information, and may be pre-trained using a reinforcement learning method, in which a reward value or a penalty value is provided according to the determined driving direction.

Here, in determining the driving direction, the neural network model may be pre-trained using reinforcement learning in which a greater reward value is provided as the estimated arrival time at the destination decreases.

In some cases, the neural network model may additionally receive noise information from a noise generator, determine the driving direction based on the noise information, the information about the direction to the destination, the information about the distance to the destination, and the surrounding environment information, and be pre-trained using the reinforcement learning method, in which the reward value or the penalty value is provided according to the determined driving direction.

Here, the neural network model may be pre-trained using reinforcement learning, in which a reward value is provided upon a decrease in the estimated arrival time at the destination, and a penalty value is provided upon a collision, proximity to an obstacle, or an increase in the estimated arrival time at the destination.

For example, the noise information may include noise corresponding to sensor input errors of the robot and operation errors of the robot.

In another case, the neural network model may additionally receive a driving direction indicator, determine the driving direction based on the driving direction indicator, the information about the direction to the destination, the information about the distance to the destination, and the surrounding environment information, and be pre-trained using the reinforcement learning method, in which the reward value or the penalty value is provided according to the determined driving direction.

For example, the driving direction indicator may include a go-straight indicator, a turn-right indicator, and a turn-left indicator.

In another case, when the surrounding environment information is input, the neural network model may pre-process the surrounding environment information to be horizontally flipped, periodically learn the horizontally flipped surrounding environment information, determine the driving direction based on the horizontally flipped surrounding environment information, the information about the direction to the destination, the information about the distance to the destination, and the surrounding environment information, and be pre-trained using the reinforcement learning method, in which the reward value or the penalty value is provided according to the determined driving direction.

In another case, the neural network model may additionally receive noise information from a noise generator and a driving direction indicator, determine the driving direction based on the noise information, the driving direction indicator, the information about the direction to the destination, the information about the distance to the destination, and the surrounding environment information, and be pre-trained using the reinforcement learning method, in which the reward value or the penalty value is provided according to the determined driving direction.

In another case, when the surrounding environment information is input, the neural network model may pre-process the surrounding environment information to be horizontally flipped, periodically learn the horizontally flipped surrounding environment information, additionally receive noise information from a noise generator, additionally receive a driving direction indicator, determine the driving direction based on the horizontally flipped surrounding environment information, the noise information, the driving direction indicator, the information about the direction to the destination, the information about the distance to the destination, and the surrounding environment information, and be pre-trained using the reinforcement learning method, in which the reward value or the penalty value is provided according to the determined driving direction.

The controller 400 may include a noise generator configured to generate noise information. Upon acquiring the noise information from the noise generator, the controller may input the noise information, result value information including a reward or a penalty according to reinforcement learning, the information about the direction to the destination, the information about the distance to the destination, and the surrounding environment information into the neural network model, and perform the reinforcement learning on the neural network model to determine the driving direction.

Here, the noise generator may add noise to the surrounding sensor information of the robot and the linear velocity and rotational velocity of the robot to generate noise corresponding to sensor input errors and operation errors of the robot.

The controller 400 may include a driving direction indicator generator configured to generate a driving direction indicator including a go-straight indicator, a turn-right indicator, and a turn-left indicator for pre-training of the neural network model related to rotation. Upon acquiring the driving direction indicator from the driving direction indicator generator, the controller may input the driving direction indicator, result value information including a reward or a penalty according to reinforcement learning, the information about the direction to the destination, the information about the distance to the destination, and the surrounding environment information into the neural network model, and perform the reinforcement learning on the neural network model to determine the driving direction.

The controller 400 may include a replay buffer configured to collect and store surrounding sensor information related to the robot used for learning of the neural network model, a pre-processor configured to extract the surrounding sensor information from the replay buffer and pre-process the surrounding sensor information to be horizontally flipped, and a trainer configured to perform pre-training by inputting the horizontally flipped surrounding sensor information into the neural network model. Upon acquiring a training result value from the trainer, the controller may input training result value information corresponding to the horizontally flipped surrounding sensor information, result value information including a reward or a penalty according to reinforcement learning, the information about the direction to the destination, the information about the distance to the destination, and the surrounding environment information into the neural network model, and perform the reinforcement learning on the neural network model to determine the driving direction.

The controller 400 may include a noise generator configured to generate noise information, and a driving direction indicator generator configured to generate a driving direction indicator comprising a go-straight indicator, a turn-right indicator, and a turn-left indicator for pre-training of the neural network model related to rotation. Upon acquiring the noise information from the noise generator and acquiring the driving direction indicator from the driving direction indicator generator, the controller may input the noise information, the driving direction indicator, result value information including a reward or a penalty according to reinforcement learning, the information about the direction to the destination, the information about the distance to the destination, and the surrounding environment information into the neural network model, and perform the reinforcement learning on the neural network model to determine the driving direction.

The controller 400 may include a noise generator configured to generate noise information, and a driving direction indicator generator configured to generate a driving direction indicator comprising a go-straight indicator, a turn-right indicator, and a turn-left indicator for pre-training of the neural network model related to rotation, a replay buffer configured to collect and store surrounding sensor information related to the robot used for training of the neural network model, a pre-processor configured to extract the surrounding sensor information from the replay buffer and pre-process the surrounding sensor information to be horizontally flipped, and a trainer configured to perform pre-training by inputting the horizontally flipped surrounding sensor information into the neural network model. Upon acquiring the noise information from the noise generator, acquiring the driving direction indicator from the driving direction indicator generator, and acquiring a training result value from the trainer, the controller may input the noise information, the driving direction indicator, training result value information corresponding to the horizontally flipped surrounding sensor information, result value information including a reward or a penalty according to reinforcement learning, the information about the direction to the destination, the information about the distance to the destination, and the surrounding environment information into the neural network model, and perform the reinforcement learning on the neural network model to determine the driving direction.

As described above, the driving robot of the present disclosure may automatically switch from the driving path-based driving mode to the artificial intelligence-based driving mode upon failure of recognition of the location of the robot or path generation, and determine an optimal driving direction. Thereby, it may stably drive to a destination and complete a service task even in challenging environmental conditions.

According to the present disclosure, even when the robot loses its path to the destination or is in a situation where driving is not possible, it may automatically switch from the driving path-based driving mode to the intuitive artificial intelligence-based driving mode and drive stably to the destination without stopping.

According to the present disclosure, when the robot fails to recognize its own location or fails to generate a path to the destination, it does not stop or perform a search operation for location re-recognition. Accordingly, the intended services (such as delivery and guidance) may be rendered by the robot without interruption.

According to the present disclosure, when the robot fails to recognize its own location or fails to generate a path to the destination, the robot may recognize its surrounding environment on its own in an intuitive artificial intelligence mode, avoid obstacles, and move toward the destination, as long as the direction to the destination is known, without requiring a map or a driving path.

FIG. 2 is a diagram illustrating a controller performing a driving path-based driving mode of a driving robot according to an embodiment of the present disclosure.

As shown in FIG. 2, the controller 400 of the present disclosure may identify the current location of the robot based on the surrounding environment information and map data. It may determine a path-based driving mode when the identification of the current location of the robot is successful, and may determine an artificial intelligence-based driving mode when the identification of the current location of the robot fails.

As shown in FIG. 2, when the determined driving mode is the driving path-based driving mode based on that the identification of the location of the robot is successful, the controller may generate a driving path based on information about the location of the robot, the map data, information about a location of the destination, and the surrounding environment information; and control the robot to move along the generated driving path.

Here, the controller 400 may include a SLAM (Simultaneous Localization and Mapping) 412, a global path planner 414, a local path planner 416, and a motion controller.

First, the SLAM 412 of the controller 400 may receive map information and robot surrounding information for matching with the map, compare this information, and recognize the current location of the robot.

That is, the SLAM 412 may determine the location of the robot by comparing the sensor information related to the robot, including camera images, lidar, and distances to obstacles around the robot, with the map information.

Next, the global path planner 414 of the controller 400 may receive the map information, location of the destination, and the location of the robot from the SLAM 412, and generate a global path including a path from the location of the robot to the location of the destination on the map.

Subsequently, the local path planner 416 of the controller 400 may receive the global path from the global path planner 414 and receive surrounding obstacle information from sensors for obstacle avoidance, and generate a local path for avoiding obstacles around the robot.

Then, the motion controller 418 of the controller 400 may control the movement of the robot by controlling the motors of the robot to follow the local path.

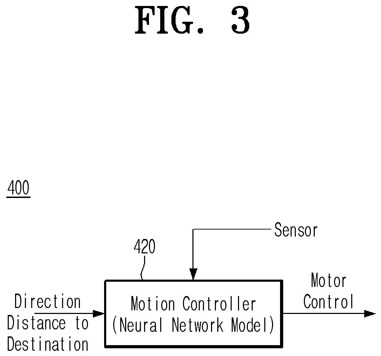

FIG. 3 is a diagram illustrating a controller performing an artificial intelligence-based driving mode of a driving robot according to an embodiment of the present disclosure.

As shown in FIG. 3, the controller 400 of the present disclosure may identify the current location of the robot based on the surrounding environment information and the map data, determine the path-based driving mode upon successful identification of the current location of the robot, and determine the artificial intelligence-based driving mode upon failure to identify the current location of the robot.

As shown in FIG. 3, when the determined driving mode is an artificial intelligence-based driving mode due to a failure to identify the location of the robot, the controller may determine an optimal driving direction by inputting information about the direction to a destination, the information about the distance to the destination, and the surrounding environment information into a pre-trained neural network model 420, and control the robot to move in the determined driving direction.

Here, the neural network model 420 of the motion controller may determine the driving direction based on the information about the direction to the destination, the information about the distance to the destination, and the surrounding environment information, and may be pre-trained using a reinforcement learning method, in which a reward value or a penalty value is provided according to the determined driving direction.

Here, in determining the driving direction, the neural network model 420 may be pre-trained using reinforcement learning in which a greater reward value is provided as the estimated arrival time at the destination decreases.

For example, the reinforcement learning method is operated as follows.

Reinforcement learning is a method by which an agent (in this case, a robot) takes actions (in this case, robot motion control) based on observations (in this case, information measured by sensors) from the surrounding environment, and autonomously learns actions (robot motion control) to receive better rewards according to the environment (sensor information), while receiving rewards (a positive score if the action produces a good result, such as the robot avoiding obstacles and moving closer to the destination, or a penalty if it produces a poor result, such as colliding with an obstacle or moving farther away).

When an actual robot is trained with reinforcement learning, erroneous robot movements may lead to collisions with obstacles and accidents. For this reason, training may primarily be conducted in a simulation environment.

In a simulation environment, a reinforcement learning motion controller may control a simulation robot to perform various operations.

A reward value may be given if the operation result of the robot is good (which means that it arrives at the destination successfully or avoids obstacles well), and a penalty value may be given if the operation result of the robot is poor (which means that it collides with an obstacle or takes a long detour), such that the reinforcement learning motion controller learns to receive better reward values.

Training of the reinforcement learning robot motion controller proceeds such that the robot receives better rewards in the simulation environment. Thus, the robot may be trained to receive a higher reward value as it avoids obstacles more effectively and arrives at the destination quickly.

As such, the present disclosure may have the following advantages by applying reinforcement learning to driving of the robot.

According to the present disclosure, since the robot navigates through an artificial intelligence robot driving controller using reinforcement learning without generating a path, the system structure may be simple and the process load may be smaller than in conventional methods.

In addition, according to the present disclosure, the artificial intelligence controller using reinforcement learning may enable the robot to intuitively navigate around obstacles like a human when open spaces between obstacles are visible and only the direction to the destination is known. Accordingly, faster robot control speed and more human-like driving behavior may be obtained than with conventional controllers.

In addition, reinforcement learning may enable the robot to be trained to behave differently depending on the intended learning objective.

For example, the present disclosure may enable the robot to be trained to operate in different ways according to the goal, such as a first training method that makes the robot follow a given path well, a second training method that makes the robot ignore the path and focuses solely on driving toward the destination, a third training method that makes the robot avoid obstacles well when there are many, and a fourth training method that allows some degree of collision but ensures that the robot reaches the destination as quickly as possible.

In addition, according to the present disclosure, the neural network model of the motion controller may be trained using a training method that makes the robot move toward the destination when only the direction and distance to the destination are given without a path, and a training method that makes the robot avoid obstacles when encountered during navigation so as not to collide with the obstacles.

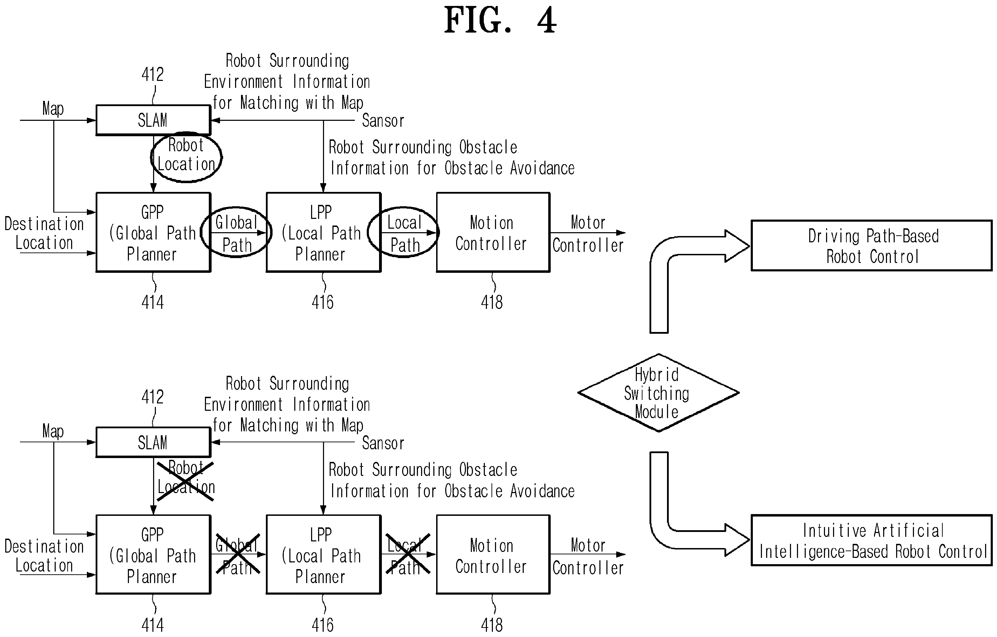

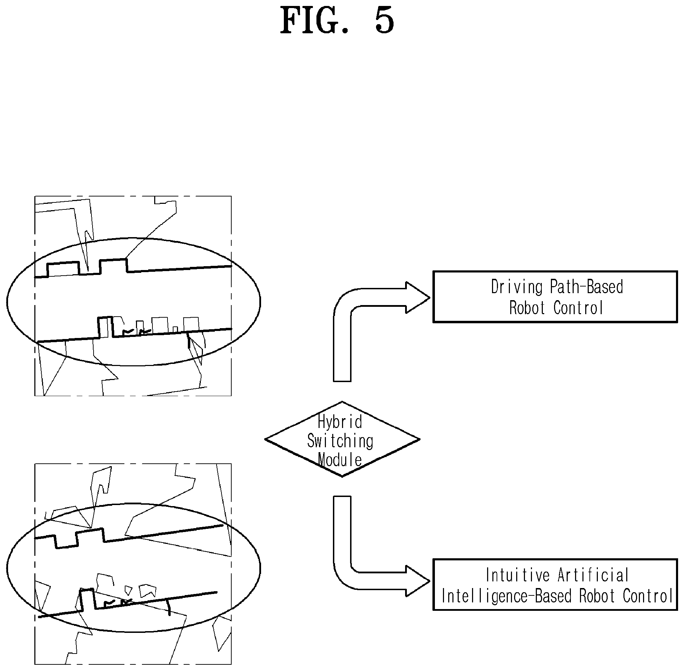

FIGS. 4 and 5 are diagrams illustrating conditions for determining a driving mode of a driving robot according to an embodiment of the present disclosure.

As shown in FIGS. 4 and 5, according to the present disclosure, the location of the robot may be identified based on the surrounding environment information and the map data, and the driving mode may be determined based on whether the location of the robot is identified. When the determined driving mode is an artificial intelligence-based driving mode due to a failure to identify the location of the robot, an optimal driving direction may be determined by inputting information about the direction to the destination, information about the distance to the destination, and the surrounding environment information into a pre-trained neural network model, and the drive motor may be controlled to cause the robot to move in the determined driving direction.

Regarding determining the driving mode, the present disclosure may have a hybrid switching module capable of determining a first driving mode based on a driving path when the identification of the location of the robot is successful and determining a second driving mode based on artificial intelligence when the identification of the location of the robot fails.

As shown in FIG. 4, according to the present disclosure, the location of the robot is successfully recognized by the SLAM 412 and paths such as a global path and local path are successfully generated by the GPP 414 and LPP 416, the driving mode may be determined as the first path-based driving mode through the hybrid switching module.

On the other hand, in the present disclosure, when the SLAM 412 fails recognize the location of the robot and the GPP 414 and the LPP 416 fail to generate paths such as a global path and local path, it may be determined through the hybrid switching module that the driving mode is the intuitive artificial intelligence-based second driving mode.

As shown in FIG. 5, in the present disclosure, when the location of the robot is successfully recognized by the SLAM 412 and paths such as a global path and local path are successfully generated by the GPP 414 and LPP 416, the shapes of the map walls and the obstacles input from the robot's sensors appear similar with respect to the location of the robot, indicating no problem with the location of the robot on the map, and accordingly the robot may be controlled based on the driving path.

On the other hand, in the present disclosure, when the SLAM 412 fails recognize the location of the robot and the GPP 414 and the LPP 416 fail to generate paths such as a global path and local path, the shapes of the map walls and the obstacles input from the robot's sensors appear different with respect to the location of the robot, indicating that the robot has failed to recognize its position on the map, and accordingly the robot may be controlled based on intuitive artificial intelligence.

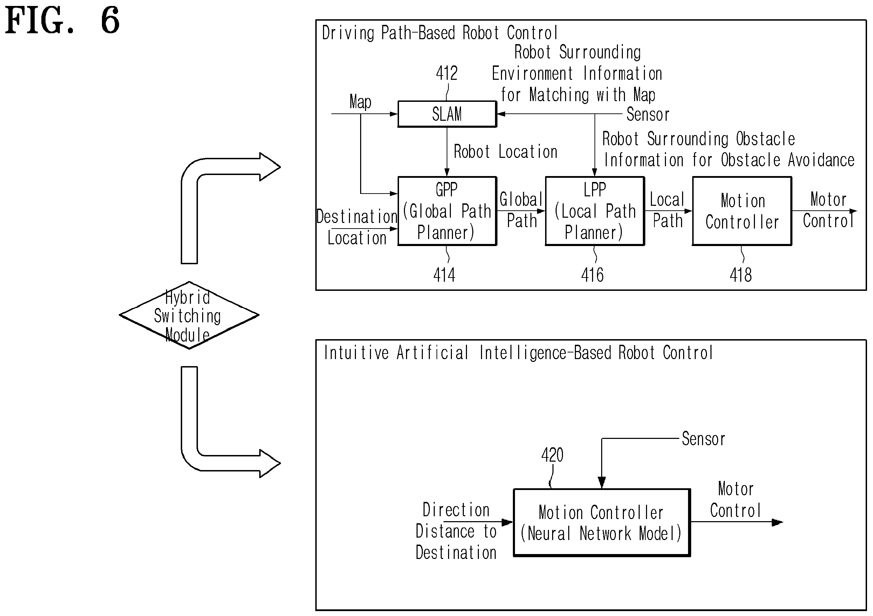

FIG. 6 is a diagram illustrating a hybrid driving mode of a driving robot according to an embodiment of the present disclosure.

As shown in FIG. 6, according to the present disclosure, when the driving mode is determined to be the first driving mode based on the driving path, the current driving mode may be checked. When the current driving mode is the second driving mode based on the artificial intelligence, the second driving mode may be changed to the determined first driving mode. When the current driving mode is the first driving mode based on the driving path, the first driving mode may be maintained.

In addition, according to the present disclosure, when the driving mode is determined as the second driving mode based on the artificial intelligence, the current driving mode may be checked. When the current driving mode is the first driving mode based on the driving path, the first driving mode may be changed to the determined second driving mode. When the current driving mode is the second driving mode based on the artificial intelligence, the second driving mode may be maintained.

As such, according to the present disclosure, when the determined driving mode is the driving path-based driving mode based on that the identification of the location of the robot is successful, a driving path may be generated based on information about the location of the robot, the map data, information about the location of the destination, and the surrounding environment information; and the drive motor may be controlled to cause the robot to move along the generated driving path.

Here, when failing to generate a driving path in generating the driving path, the path-based driving mode may be changed to the artificial intelligence-based driving mode.

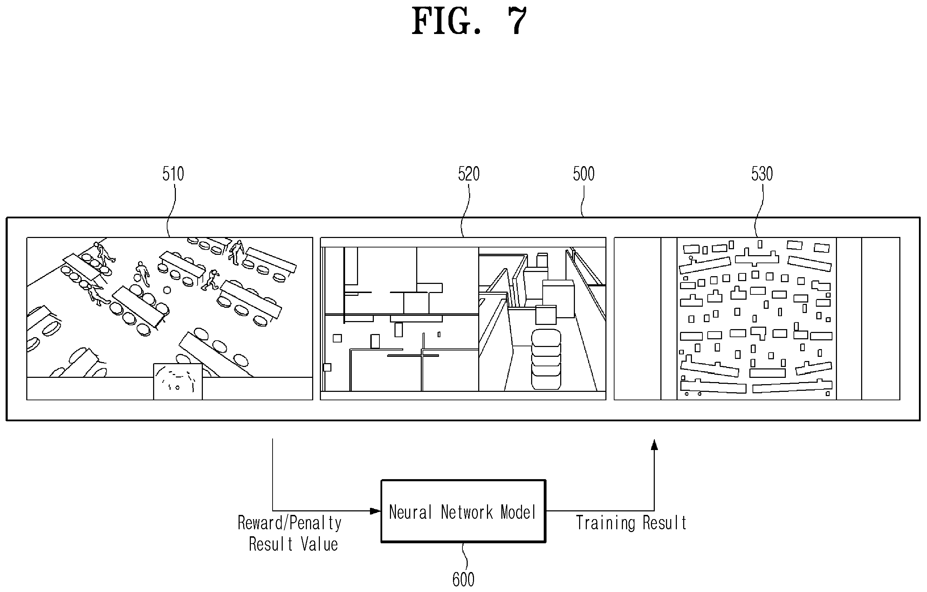

FIGS. 7 to 10 are diagrams illustrating a neural network model training process of a driving robot according to an embodiment of the present disclosure.

As shown in FIG. 7, according to the present disclosure, when the driving mode is an artificial intelligence-based driving mode due to a failure to identify the location of the robot, an optimal driving direction may be determined by inputting information about the direction to the destination, information about the distance to the destination, and the surrounding environment information into a pre-trained neural network model 600.

Here, the neural network model 600 may determine the driving direction based on the information about the direction to the destination, the information about the distance to the destination, and the surrounding environment information, and may be pre-trained using a reinforcement learning method, in which a reward value or a penalty value is provided according to the determined driving direction.

That is, in determining the driving direction, the neural network model 600 may be pre-trained using reinforcement learning in which a greater reward value is provided as the estimated arrival time at the destination decreases.

The present disclosure may implement a simulation environment 500 for reinforcement learning that reflects actual delivery and driving sites as closely as possible.

For example, as shown in FIG. 7, as the simulation environment 500 for reinforcement learning, simulations of an actual crowded delivery environment 510, a scenario 520 of delivering while avoiding obstacles in a hallway 520, or various other obstacle avoidance scenarios 530 may be used for training.

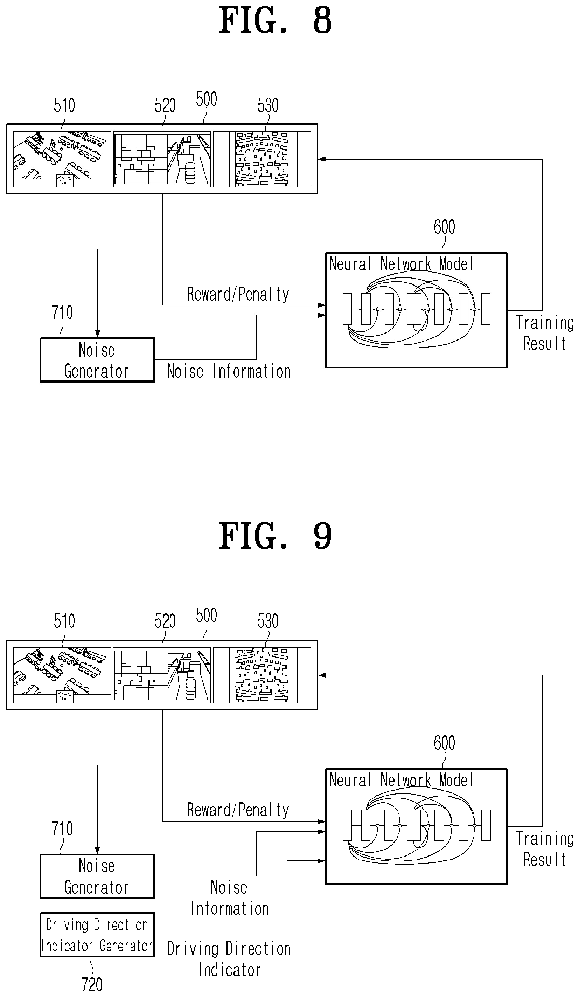

As shown in FIG. 8, the present disclosure may include a noise generator 710 configured to generate noise information. Upon acquiring the noise information from the noise generator 710, the noise information, result value information including a reward or a penalty according to reinforcement learning, the information about the direction to the destination, the information about the distance to the destination, and the surrounding environment information may be input into the neural network model 600, and the reinforcement learning may be performed on the neural network model 600 to determine the driving direction.

Here, the noise generator 710 may add noise to the surrounding sensor information of the robot and the linear velocity and rotational velocity of the robot to generate noise corresponding to sensor input errors and operation errors of the robot.

As shown in FIG. 8, the neural network model 600 may additionally receive noise information from the noise generator 710, determine the driving direction based on the noise information, the information about the direction to the destination, the information about the distance to the destination, and the surrounding environment information, and be pre-trained using the reinforcement learning method, in which the reward value or the penalty value is provided according to the determined driving direction.

Here, the neural network model 600 may be pre-trained using reinforcement learning, in which a reward value is provided upon a decrease in the estimated arrival time at the destination, and a penalty value is provided upon a collision, proximity to an obstacle, or an increase in the estimated arrival time at the destination.

For example, the noise information may include noise corresponding to sensor input errors of the robot and operation errors of the robot.

In addition, according to the present disclosure, as the simulation environment 500 for reinforcement learning, simulations of an actual crowded delivery environment 510, a scenario 520 of delivering while avoiding obstacles in a hallway 520, or various other obstacle avoidance scenarios 530 may be used for training.

As shown in FIG. 9, the present disclosure may include a noise generator 710 configured to generate noise information, and a driving direction indicator generator 720 configured to generate a driving direction indicator comprising a go-straight indicator, a turn-right indicator, and a turn-left indicator for pre-training of the neural network model related to rotation.

Here, according to the present disclosure, upon acquiring the noise information from the noise generator 710 and acquiring the driving direction indicator from the driving direction indicator generator 720, the noise information, the driving direction indicator, result value information including a reward or a penalty according to reinforcement learning, the information about the direction to the destination, the information about the distance to the destination, and the surrounding environment information may be input into the neural network model 600, and the reinforcement learning may be performed on the neural network model 600 to determine the driving direction.

That is, the neural network model 600 may additionally receive noise information from the noise generator 710 and a driving direction indicator from the driving direction indicator generator 720, determine the driving direction based on the noise information, the driving direction indicator, the information about the direction to the destination, the information about the distance to the destination, and the surrounding environment information, and may be pre-trained using a reinforcement learning method, in which a reward value or a penalty value is provided according to the determined driving direction.

For example, the driving direction indicator may include a go-straight indicator, a turn-right indicator, and a turn-left indicator.

In addition, according to the present disclosure, as the simulation environment 500 for reinforcement learning, simulations of an actual crowded delivery environment 510, a scenario 520 of delivering while avoiding obstacles in a hallway 520, or various other obstacle avoidance scenarios 530 may be used for training.

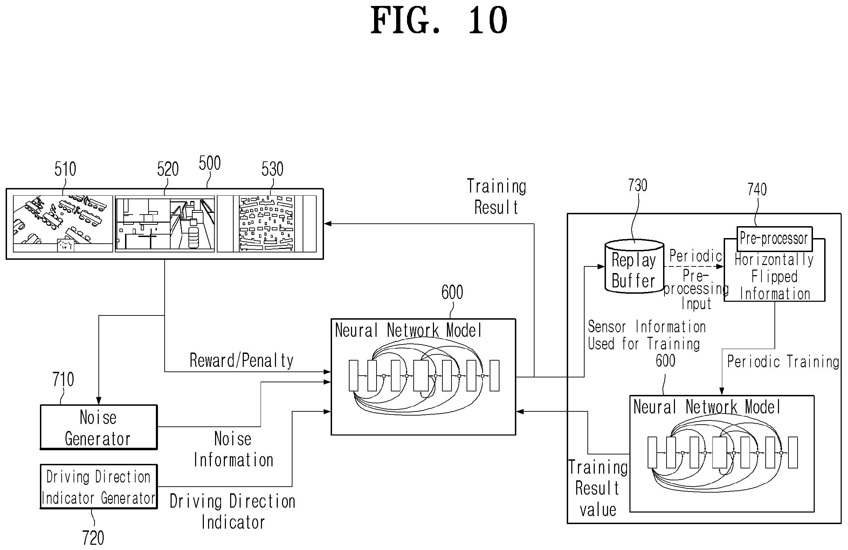

As shown in FIG. 10, the present disclosure may include a noise generator 710 configured to generate noise information, a driving direction indicator generator 720 configured to generate a driving direction indicator comprising a go-straight indicator, a turn-right indicator, and a turn-left indicator for pre-training of the neural network model related to rotation, a replay buffer 730 configured to collect and store surrounding sensor information related to the robot used for training of the neural network model 600, a pre-processor 740 configured to extract the surrounding sensor information from the replay buffer 730 and pre-process the surrounding sensor information to be horizontally flipped, and a trainer configured to perform pre-training by inputting the horizontally flipped surrounding sensor information into the neural network model 600.

According to the present disclosure, when the noise information is acquired from the noise generator 710, the driving direction indicator is acquired from the driving direction indicator generator 720, and a training result value is acquired from the trainer, the noise information, the driving direction indicator, training result value information corresponding to the horizontally flipped surrounding sensor information, result value information including a reward or a penalty according to reinforcement learning, the information about the direction to the destination, the information about the distance to the destination, and the surrounding environment information may be input into the neural network model 600, and the reinforcement learning may be performed on the neural network model 600 to determine the driving direction.

In addition, according to the present disclosure, as the simulation environment 500 for reinforcement learning, simulations of an actual crowded delivery environment 510, a scenario 520 of delivering while avoiding obstacles in a hallway 520, or various other obstacle avoidance scenarios 530 may be used for training.

In some cases, the present disclosure may include a driving direction indicator generator configured to generate a driving direction indicator including a go-straight indicator, a turn-right indicator, and a turn-left indicator for pre-training of the neural network model related to rotation. Upon acquiring the driving direction indicator from the driving direction indicator generator, the driving direction indicator, result value information including a reward or a penalty according to reinforcement learning, the information about the direction to the destination, the information about the distance to the destination, and the surrounding environment information may be input into the neural network model, and the reinforcement learning may be performed on the neural network model to determine the driving direction.

Here, the neural network model may additionally receive a driving direction indicator, determine the driving direction based on the driving direction indicator, the information about the direction to the destination, the information about the distance to the destination, and the surrounding environment information, and be pre-trained using the reinforcement learning method, in which the reward value or the penalty value is provided according to the determined driving direction.

In another case, the present disclosure may include a replay buffer configured to collect and store surrounding sensor information related to the robot used for training of the neural network model, a pre-processor configured to extract the surrounding sensor information from the replay buffer and pre-process the surrounding sensor information to be horizontally flipped, and a trainer configured to perform pre-training by inputting the horizontally flipped surrounding sensor information into the neural network model. Upon acquiring a training result value from the trainer, training result value information corresponding to the horizontally flipped surrounding sensor information, result value information including a reward or a penalty according to reinforcement learning, the information about the direction to the destination, the information about the distance to the destination, and the surrounding environment information may be input into the neural network model, and the reinforcement learning may be performed on the neural network model to determine the driving direction.

Here, when the surrounding environment information is input, the neural network model may pre-process the surrounding environment information to be horizontally flipped, periodically learn the horizontally flipped surrounding environment information, determine the driving direction based on the horizontally flipped surrounding environment information, the information about the direction to the destination, the information about the distance to the destination, and the surrounding environment information, and be pre-trained using the reinforcement learning method, in which the reward value or the penalty value is provided according to the determined driving direction.

In another case, when the surrounding environment information is input, the neural network model may pre-process the surrounding environment information to be horizontally flipped, periodically learn the horizontally flipped surrounding environment information, additionally receive noise information from a noise generator, additionally receive a driving direction indicator, determine the driving direction based on the horizontally flipped surrounding environment information, the noise information, the driving direction indicator, the information about the direction to the destination, the information about the distance to the destination, and the surrounding environment information, and be pre-trained using the reinforcement learning method, in which the reward value or the penalty value is provided according to the determined driving direction.

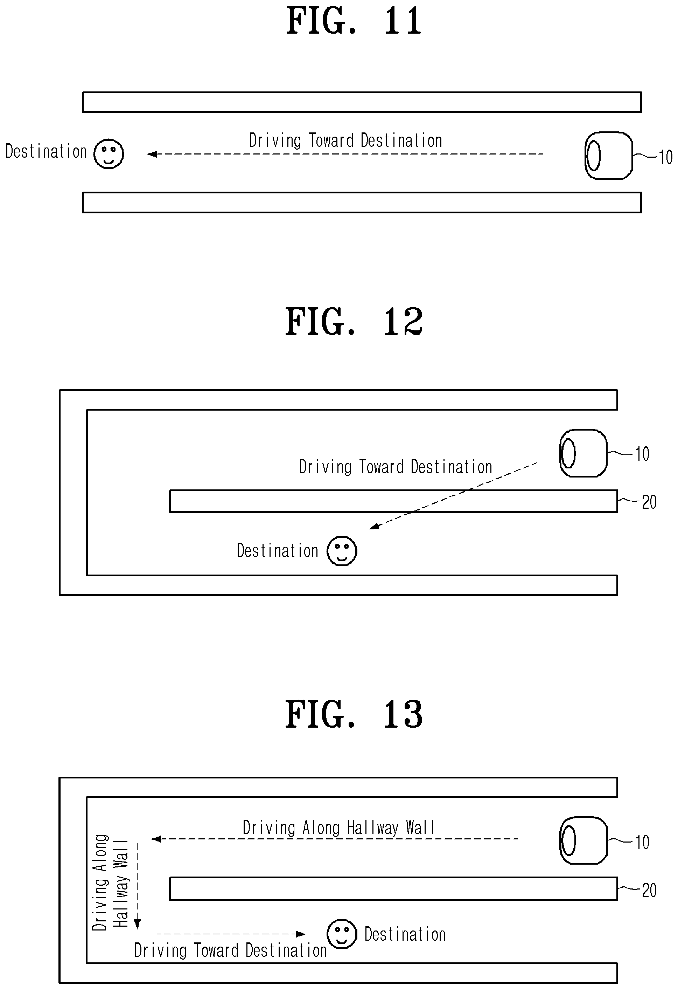

FIGS. 11 to 13 are diagrams illustrating hallway driving of a driving robot according to an embodiment of the present disclosure.

As shown in FIGS. 11 to 13, according to the present disclosure, in determining the optimal driving direction, a first driving direction may be determined based on the information about the direction to the destination and the information about the distance to the destination, and it may be checked whether an obstacle is present in the first driving direction based on the surrounding environment information. When the obstacle is present in the first driving direction, the first driving direction may be changed to a second driving direction.

Here, when the obstacle is not found present in the first driving direction in checking whether the obstacle is present in the first driving direction, the first driving direction may be determined as the optimal driving direction.

According to the present disclosure, when the obstacle is found present in the first driving direction in checking whether the obstacle is present in the first driving direction, and it may be checked whether the obstacle is a hallway wall. When the obstacle is the hallway wall, a direction along the hallway wall may be recognized as the direction to the destination.

In this case, when a straight line is detected in the first driving direction based on the surrounding environment information in checking whether the obstacle is the hallway wall, the detected straight line may be recognized as the obstacle, and it may be checked whether the detected straight line is longer than or equal to a set length. When the detected straight line is longer than or equal to the set length, the obstacle may be recognized as the hallway wall.

As shown in FIG. 11, in the present disclosure, when the destination is at the end of a hallway, driving of the robot may be controlled to avoid only the obstacles ahead and reach the destination at high speed.

However, as shown in FIG. 12, when the destination is located in another parallel hallway, the motion controller may control the robot to move cautiously while reducing the driving speed of the robot for obstacle avoidance, because it considers the hallway wall as an obstacle to be avoided.

That is, in a hallway driving situation, when the robot is driven by the reinforcement learning motion controller, it may reach the destination quickly if the destination is at the end of the hallway. However, if the destination is located around a corner at a hallway intersection or in another parallel hallway, the robot may slow down as it considers the hallway wall simply as an obstacle to be bypassed.

Therefore, as shown in FIG. 13, according to the present disclosure, the robot may be controlled such that when the robot is in a hallway and the direction to the destination is not aligned with the hallway direction or the destination is not in the same hallway, the robot switches from the direction along the hallway wall to the destination direction for driving. When the destination direction is aligned with the hallway or the destination is in the same hallway, the robot may be controlled to move directly toward the destination.

That is, in the present disclosure, when a hallway wall is detected in the surrounding obstacle information sensed by the sensors of the robot, the robot may be controlled using the reinforcement learning motion controller such that the direction along the hallway wall is used as the destination direction instead of using the actual destination direction.

The presence of a hallway wall may be determined by detecting straight lines of a certain length or longer from the surrounding sensor information related to the robot.

Fixed obstacles and moving obstacles (such as people) may not be recognized as walls, as they are recognized as having short lengths.

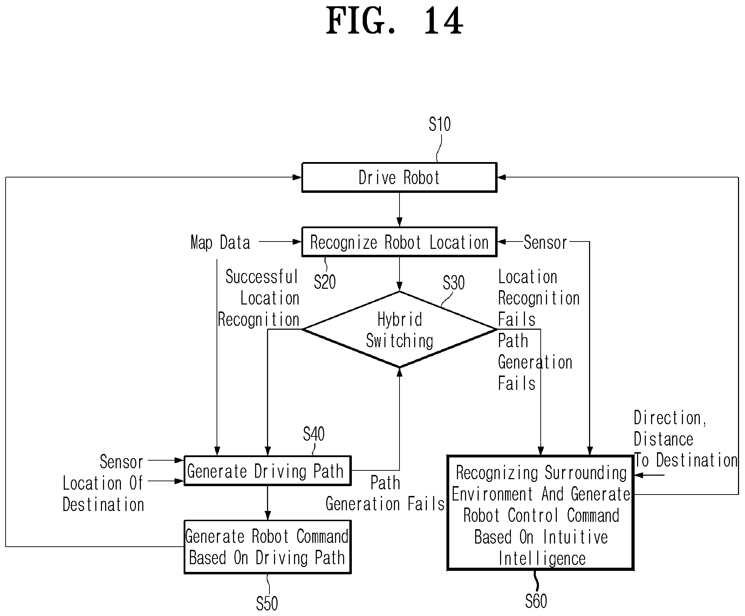

FIG. 14 is a flowchart illustrating a control process of a driving robot according to an embodiment of the present disclosure.

As shown in FIG. 14, according to the present disclosure, when the robot is driven (S10), it may acquire surrounding environment information and map data, and identify a location of the robot based on the surrounding environment information and the map data (S20).

Then, in the present disclosure, hybrid switching may be performed to determine a driving mode based on whether the location of the robot is identified (S30).

Subsequently, in the present disclosure, when the determined driving mode is a driving path-based driving mode based on that the identification of the location of the robot is successful, a driving path may be generated based on information about the location of the robot, the map data, information about a location of the destination, and the surrounding environment information (S40), and a robot control command may be generated to move the robot along the generated driving path (S50).

Here, when the generation of the driving path fails, hybrid switching may be performed to change the driving path-based driving mode to the artificial intelligence-based driving mode (S30).

Next, according to the present disclosure, when the determined driving mode is an artificial intelligence-based driving mode due to a failure to identify the location of the robot, an optimal driving direction may be determined by inputting information about the direction to the destination, information about the distance to the destination, and the surrounding environment information into a pre-trained neural network model, and a robot control command may be generated to move the driving robot in the determined driving direction (S60).

As described above, according to the present disclosure, upon failing to recognize the location of the robot or failing to generate a path, the robot may automatically switch from a driving path-based driving mode to an artificial intelligence-based driving mode and determine an optimal driving direction, thereby stably driving to a destination and completing a service task even in challenging environmental conditions.

As such, according to the present disclosure, the robot may automatically switch from a driving path-based driving mode to an intuitive artificial intelligence-based driving mode and drive stably to a destination without stopping, even when the robot loses the path to the destination or is in a situation where driving is not possible.

According to the present disclosure, when the robot fails to recognize its own location or fails to generate a path to the destination, it does not stop or perform a search operation for location re-recognition. Accordingly, the intended services (such as delivery and guidance) may be rendered by the robot without interruption.

According to the present disclosure, when a driving robot fails to recognize its own location or fails to generate a path to the destination, the robot may recognize its surrounding environment on its own in an intuitive artificial intelligence mode, avoid obstacles, and move toward the destination, as long as the direction to the destination is known, without requiring a map or a driving path.

### INDUSTRIAL APPLICABILITY

According to the present disclosure, upon failing to recognize the location of the robot or failing to generate a path, a driving robot may automatically switch from a driving path-based driving mode to an artificial intelligence-based driving mode and determine an optimal driving direction, thereby stably driving to a destination and completing a service task. Accordingly, the present disclosure has remarkable industrial applicability.

## Claims

1. A driving robot comprising:
a sensor configured to acquire surrounding environment information;
an input unit configured to receive map data;
a drive motor configured to move the robot; and
a controller configured to determine a driving mode based on the surrounding environment information and the map data and to control the drive motor,
wherein the controller is configured to:
identify a location of the robot based on the surrounding environment information and the map data;
determine the driving mode based on whether the location of the robot is identified;
based on the determined driving mode being an artificial intelligence-based driving mode due to a failure to identify the location of the robot, determine an optimal driving direction by inputting information about a direction to a destination, information about a distance to the destination, and the surrounding environment information into a pre-trained neural network model; and
control the drive motor to cause the robot to move in the determined driving direction.

2. The driving robot of claim 1, wherein, in identifying the location of the robot, the controller acquires the surrounding environment information and the map data, and matches the map data with the surrounding environment information to identify a current location of the robot.

3. The driving robot of claim 1, wherein, in determining the driving mode, the controller is configured to:
determine a first driving mode based on a driving path when the identification of the location of the robot is successful; and
determine a second driving mode based on artificial intelligence when the identification of the location of the robot fails.

4. The driving robot of claim 1, wherein, based on the determined driving mode being a driving path-based driving mode based on that the identification of the location of the robot is successful, the controller is configured to:
generate a driving path based on information about the location of the robot, the map data, information about a location of the destination, and the surrounding environment information; and
control the drive motor to cause the robot to move along the generated driving path.

5. The driving robot of claim 1, wherein, in determining the optimal driving direction, the controller is configured to:
determine a first driving direction based on the information about the direction to the destination and the information about the distance to the destination;
check whether an obstacle is present in the first driving direction based on the surrounding environment information; and
change the first driving direction to a second driving direction when the obstacle is present in the first driving direction.

6. The driving robot of claim 5, wherein, based on the obstacle being found present in the first driving direction in checking whether the obstacle is present in the first driving direction, the controller is configured to:
check whether the obstacle is a hallway wall; and
recognize a direction along the hallway wall as the direction to the destination when the obstacle is the hallway wall.

7. The driving robot of claim 6, wherein, based on a straight line being detected in the first driving direction based on the surrounding environment information in checking whether the obstacle is the hallway wall, the controller is configured to:
recognize the detected straight line as the obstacle;
check whether the detected straight line is longer than or equal to a set length; and
recognize the obstacle as the hallway wall when the detected straight line is longer than or equal to the set length.

8. The driving robot of claim 1, wherein the neural network model determines the driving direction based on the information about the direction to the destination, the information about the distance to the destination, and the surrounding environment information, and is pre-trained using a reinforcement learning method,
wherein, in the reinforcement learning method, a reward value or a penalty value is provided according to the determined driving direction.

9. The driving robot of claim 8, wherein the neural network model additionally receives noise information from a noise generator, determines the driving direction based on the noise information, the information about the direction to the destination, the information about the distance to the destination, and the surrounding environment information, and is pre-trained using the reinforcement learning method,
wherein, in the reinforcement learning method, the reward value or the penalty value is provided according to the determined driving direction.

10. The driving robot of claim 8, wherein the neural network model additionally receives a driving direction indicator, determines the driving direction based on the driving direction indicator, the information about the direction to the destination, the information about the distance to the destination, and the surrounding environment information, and is pre-trained using the reinforcement learning method,
wherein, in the reinforcement learning method, the reward value or the penalty value is provided according to the determined driving direction.

11. The driving robot of claim 8, wherein, based on the surrounding environment information being input, the neural network model is configured to:
pre-process the surrounding environment information to be horizontally flipped;
periodically learn the horizontally flipped surrounding environment information;
determine the driving direction based on the horizontally flipped surrounding environment information, the information about the direction to the destination, the information about the distance to the destination, and the surrounding environment information; and
be pre-trained using the reinforcement learning method,
wherein, in the reinforcement learning method, the reward value or the penalty value is provided according to the determined driving direction.

12. The driving robot of claim 1, wherein the controller comprises a noise generator configured to generate noise information,
wherein, upon acquiring the noise information from the noise generator, the controller inputs the noise information, result value information including a reward or a penalty according to reinforcement learning, the information about the direction to the destination, the information about the distance to the destination, and the surrounding environment information into the neural network model, and performs the reinforcement learning on the neural network model to determine the driving direction.

13. The driving robot of claim 1, wherein the controller comprises:
a noise generator configured to generate noise information; and
a driving direction indicator generator configured to generate a driving direction indicator comprising a go-straight indicator, a turn-right indicator, and a turn-left indicator for pre-training of the neural network model related to rotation,
wherein, upon acquiring the noise information from the noise generator and acquiring the driving direction indicator from the driving direction indicator generator, the controller inputs the noise information, the driving direction indicator, result value information including a reward or a penalty according to reinforcement learning, the information about the direction to the destination, the information about the distance to the destination, and the surrounding environment information into the neural network model, and performs the reinforcement learning on the neural network model to determine the driving direction.

14. The driving robot of claim 1, wherein the controller comprises:
a noise generator configured to generate noise information;
a driving direction indicator generator configured to generate a driving direction indicator comprising a go-straight indicator, a turn-right indicator, and a turn-left indicator for pre-training of the neural network model related to rotation;
a replay buffer configured to collect and store surrounding sensor information related to the robot used for training of the neural network model;
a pre-processor configured to extract the surrounding sensor information from the replay buffer and pre-process the surrounding sensor information to be horizontally flipped; and
a trainer configured to perform pre-training by inputting the horizontally flipped surrounding sensor information into the neural network model,
wherein, upon acquiring the noise information from the noise generator, acquiring the driving direction indicator from the driving direction indicator generator, and acquiring a training result value from the trainer, the controller inputs the noise information, the driving direction indicator, training result value information corresponding to the horizontally flipped surrounding sensor information, result value information including a reward or a penalty according to reinforcement learning, the information about the direction to the destination, the information about the distance to the destination, and the surrounding environment information into the neural network model, and performs the reinforcement learning on the neural network model to determine the driving direction.

15. A method of controlling a driving robot including a drive motor, the method comprising:
acquiring surrounding environment information and map data;
identifying a location of the robot based on the surrounding environment information and the map data;
determining a driving mode based on whether the location of the robot is identified;
based on the determined driving mode being an artificial intelligence-based driving mode due to a failure to identify the location of the robot, determining an optimal driving direction by inputting information about a direction to a destination, information about a distance to the destination, and the surrounding environment information into a pre-trained neural network model; and
controlling the drive motor to cause the driving robot to move in the determined driving direction.
